# EUROPEAN PATENT SPECIFICATION

(11) **EP 0 388 558 B1**
(45) Date of publication and mention of the grant of the patent: **28.09.1994**
(21) Application number: 89311796.0
(22) Date of filing: 15.11.1989
(51) Int. Cl.: H01M 8/12, H01M 4/86

(54) **Exterior porous high activity cermet fuel electrode**
Poröse äussere Brennstoffzellenelektrode aus Cermet mit hoher Aktivität
Electrode poreuse, extérieure à combustible en cermet à grande activité

(30) Priority: 22.03.1989 US 327748
(43) Date of publication of application: 26.09.1990
(73) Proprietor: WESTINGHOUSE ELECTRIC CORPORATION, Pittsburgh Pennsylvania 15222 (US)
(72) Inventor: Ruka, Roswell John, Pittsburgh, PA 15235 (US); Spengler, Charles J., Murrysville, PA 15668 (US)
(74) Representative: van Berlyn, Ronald Gilbert

(56) References cited:
- EP-A- 0 253 459
- DE-B- 2 747 467
- GB-A- 2 018 833

## Description

This invention relates to modified cermet fuel electrodes for solid oxide electrolyte, electrochemical cells having a high number of electrochemically active sites.

The use of a nickel-zirconia cermet fuel electrode for solid oxide electrolyte electrochemical cells is well known in the art, and taught, for example, in U.S. Patent Specification No. 4,490,444 (Isenberg). This electrode is approximately 50 micrometers thick, and contains nickel particles embedded in a zirconia skeletal structure. This fuel electrode or anode must be compatible in electrical, and physical-mechanical characteristics, such as thermal expansion, to the solid oxide electrolyte to which it is attached, and must be also be chemically resistant to contaminants, such as sulfur, found in contacting fuel feed gases. In U.S. Patent Specification No. 4,702,971 (Isenberg), an attempt was made to provide a sulfur resistant fuel electrode by coating the fuel electrode with an ionic-electronic conductive coating containing doped or undoped cerium oxide or doped or undoped uranium oxide, where the dopants were zirconia, thoria, or lanthanide oxides. The coatings were applied over "large", 1 micrometer to 5 micrometer conductor particles, in a zirconia skeleton, as salt solutions of the metal oxide coating desired. Such coatings solved sulfur tolerance problems, but even further improvements of the fuel electrodes are needed, especially in the areas of increasing active sites and improving the catalytic activity of the fuel electrode.

It is a main object of this invention to provide such improved fuel electrodes for solid oxide electrolyte electrochemical cells.

Accordingly, the invention resides in an exterior porous electrode bonded to a solid oxygen ion conducting electrolyte, where the electrolyte is also in contact with an interior electrode, said exterior electrode comprising a layer of coarse metal particles selected from the group consisting of nickel particles, cobalt particles, and mixtures thereof, having diameters from 3 micrometers to 35 micrometers, characterized in that the layer of particles of the exterior electrode are coated with a separate, electronically conductive, porous, multiphase layer consisting essentially of (a) fine metal particles selected from the group consisting of discrete nickel particles, discrete cobalt particles, and mixtures thereof, having diameters from 0.05 micrometer to 1.75 micrometer, and (b) conductive oxide selected from the group consisting of cerium oxide, doped cerium oxide, strontium titanate, doped strontium titanate, and mixtures thereof. In many embodiments, the coarse metal particles will be partly embedded in a skeletal structure comprising zirconia.

The invention also resides in a method of coating a separate, electronically conductive layer on an exterior, porous electrode layer bonded to a solid oxygen ion conducting electrolyte, where the electrolyte is also in contact with an interior electrode, characterized by the steps: (1) applying, to the exterior porous electrode layer, an admixture consisting essentially of: (a) a first metal containing salt where the metal containing component is selected from the group consisting of nickel, cobalt, and mixtures thereof, and the salt component is selected from the group consisting of nitrate, acetate, propionate, butyrate, and mixtures thereof, and (b) a second metal containing salt where the metal containing component is selected from the group consisting of cerium, doped cerium, strontium-titanium, doped strontium-titanium, and mixtures thereof, and the salt component is selected from the group consisting of nitrate, acetate, propionate, butyrate, and mixtures thereof and (c) non-ionic surfactant, and (2) heating the coating admixture in an atmosphere of hydrogen and water, containing a little more hydrogen than just needed to decompose the admixture to elemental nickel, cobalt, and their mixtures, and form an oxide of the other metal components contained in the admixture, the heating being at a temperature effective to form a separate, solid, electronically conductive, porous, multiphase layer consisting essentially of conductive oxide selected from the group consisting of cerium oxide, doped cerium oxide, strontium, titanate, doped strontium titanate, and mixtures thereof, containing therethrough fine metal particle precipitate selected from the group consisting of discrete nickel particles, discrete cobalt particles, and mixtures thereof, having diameters from 0.05 micrometer to 1.75 micrometers.

As a practical matter, the coarse metal particles in the exterior electrode will have diameters from 5 micrometers to 35 micrometers. Preferably, the fine metal particles in the electronically conductive, porous layer over the exterior electrode will have diameters from 0.25 micrometer to 0.75 micrometer. The porous conductor layer thickness is from 0.5 micrometer to 2.0 micrometers thick and will preferably be a complete covering. The term "doped" as used herein will mean "included in the chemical structure". Dopants may include alkaline earth materials, rare earth materials, yttrium, and aluminum.

In order that the invention can be more clearly understood, convenient embodiments thereof will now be described, by way of example, with reference to the accompanying drawings in which:
Figure 1, which best illustrates the invention, is a schematic end view in section showing one embodiment of a fuel electrode, having coarse metal particles partly embedded in an oxide skeleton structure, covered with the separate multiphase coating of this invention which contains small, discrete nickel and/or cobalt particles, in a ceramic oxide matrix, all disposed on top of an electrolyte;
Figure 2 is a block diagram showing the method of this invention; and
Figure 3 is a curve of cell voltage in volts vs. time in hours for a cell prepared and operated as described in the Example, according to this invention.

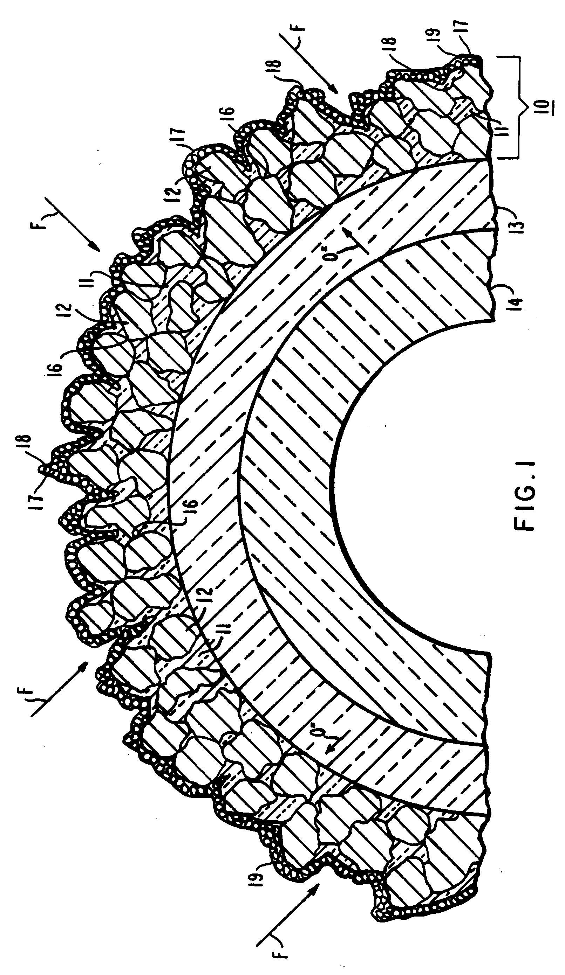

Referring now to the Drawings, Figure 1 is a much enlarged and detailed, idealized, schematic illustration of one embodiment of an electrochemical cell cross-section, showing exterior, porous fuel electrode structure 10, where a skeletal structure 11 embeds coarse metallic particles 12, to comprise the anode. A skeletal structure may not be necessary if the coarse metallic particles, for example nickel particles, can be sintered or otherwise bonded in place by appropriate means. This fuel electrode structure 10 contacts solid electrolyte 13 which is also in contact with an interior air electrode 14, to provide an electrochemical cell. The outer, multiphase layer of this invention is shown as coating 17.

The cell can have a variety of shapes but the preferred shape is tubular, as that configuration has already been used successfully in multi-kilowatt systems of solid oxide electrochemical cells. The electrolyte material 13 is typically an oxide having a fluorite-like crystal structure, but other simple oxides, mixed oxides, or mixtures of simple and mixed oxides can be used. The preferred electrolyte material is stabilized zirconia, a readily available commercial material. The zirconia may be stabilized, that is, doped, with a number of elements, as is well known in the art, but rare earth element stabilized zirconia, specifically yttria stabilized zirconia, is preferred as it has excellent oxygen ion mobility, and a long history of operation in fuel or air environments. The electrolyte layer 13 is usually from 20 micrometers to 50 micrometers thick.

The interior air electrode 14, is preferably made of doped oxides or mixtures of oxides of the perovskite family, preferably LaMnO₃. Preferred dopants are Sr, Ca, Co, Ni, Fe, and Sn, where Sn and Ca can replace part of the La and the other dopants replace part of the Mn. The air electrode is usually from 50 micrometers to 1,000 micrometers thick. Thicknesses in the range of 600 micrometers to 1,000 micrometers are useful for self-supporting type air electrodes.

A preferred fuel electrode thickness is usually from 50 micrometers to 200 micrometers, though the thickness may be adjusted to the desired resistance of the cell. Nickel and/or cobalt particles 12 are used in the porous fuel electrode structure 10. The particles 12, which are from 3 micrometers to 35 micrometers in diameter, may be applied to contact the electrolyte as a powder layer in many different ways, including slurry dipping and spraying. Another method of application is a tape transfer technique, which is useful because of ease of mass fabrication, registering of dimensions, and uniformity in thickness and porosity. Particles less than 3 micrometers are extremely difficult to effectively apply by most fabrication techniques. The preferred particle size is from 5 micrometers to 35 micrometers.

A skeletal material 11 can be used to bind the coarse conductor particles 12 to the electrolyte 13, and provide a matrix partly embedding the coarse conductor particles. The skeletal material can be applied by vapor deposition and formed from two reactants. The first reactant can be water vapor, carbon dioxide or oxygen itself, and the second reactant can be a metal halide, preferably zirconium tetrachloride, plus the halide of a stabilizing element, such as yttrium chloride. The skeletal binding material 11 may be selected to be the same material as the electrolyte (or the same material modified by doping) so that a good bond forms between the binding material 11 and the electrolyte 13 and there is a good thermal match between the two materials. A useful skeletal binding material is yttria stabilized zirconia although a wide variety of ceramic metal oxides that are compatible with the electrolyte can be used.

Electrochemically active sites in solid state electrochemical cells are where the reactant, electrolyte and electrode interface. In the case of Figure 1, these electrochemically active sites are where the fuel gas, F, shown by an arrow, is capable of combining with oxygen ions, O⁼ shown by the arrow passing through electrolyte layer 13, and where electron transfers can take place to generate an electric current. By using coarse particles and an embedding skeleton alone, the number of active areas 16 would be rather limited.

Figure 1 also shows how the nickel and/or cobalt particles 12 are covered, preferably completely, with an electronically conductive, porous, outer coating 17. Within the electronically conductive, porous, outer coating 17 are discrete, fine, nickel and/or cobalt particulate precipitates 18, much smaller than the coarse particles 12. The coating 17 can be applied by any means, although simple impregnation of the fuel electrode 10 from an aqueous salt solution is preferred.

As can be seen in Figure 1, where, as a non-limiting illustration, the relative dimensions of the layers are scaled to a 50 micrometer thick air electrode 14, a 20 micrometer thick electrolyte 13, a 50 micrometer thick fuel electrode 10 containing coarse metal particles of from about 20 micrometer to 35 micrometer approximate diameter, and a 1 micrometer to 2 micrometer thick electronically conductive, outer coating 17 containing discrete, fine nickel and/or cobalt particles 18, about 0.5 micrometer in diameter. The fine particles 18 are primarily in the form of a fine precipitate, generally isolated by an oxide matrix 19, preferably surrounding and encapsulating the particles 18, so that said particles will not agglomerate or sinter together into large lumps upon heating or operation in an electrochemical environment. The metal particle phase is an essential component of the outer coating 17.

This multiphase coating 17 not only vastly increases the number of electrochemically active sites over the case where coarse particles are used alone, but also improves the catalytic activity of the fuel electrode. Most of the fine particles 18 do not contact each other or the coarse metal particles 12 found deep within the fuel electrode. The fine particles 18 have diameters from 0.05 micrometer to 1.75 micrometers, preferably from 0.25 micrometer to 0.75 micrometer. Sizes over 1.75 micrometers would reduce overall active chemical site surface area, eliminating the main advantage of the coating of this invention. While not clearly shown in Figure 1, the multiphase outer coating 17 can extend deeply into interstices deep within the fuel electrode structure.

Useful, conductive, ceramic oxides for the matrix 19 of the multiphase outer coating 17, are selected from the group consisting of cerium oxide, doped cerium oxide, strontium titanate (SrTiO₃), doped strontium titanate, and mixtures thereof, preferably cerium oxide or doped cerium oxide. Useful dopant oxides, included in a "minor amount", that is, up to about 45 mole % doping element, for the purpose of increasing electronic conduction or causing a closer match of the coefficient of thermal expansion, are selected from the group consisting of oxides of: alkaline earth metal materials Mg, Ca, Sr, Ba; rare earth materials La, Ce, Pr, Nd, Pm, Sm, Eu, Gd, Tb, Dy, Ho, Er, Tm, Yb; Y; and Al; and mixtures of all these. Cerium can be used when strontium titanate is to be doped and strontium can be used when cerium is to be doped. Preferred dopants are oxides of Ca and Sm.

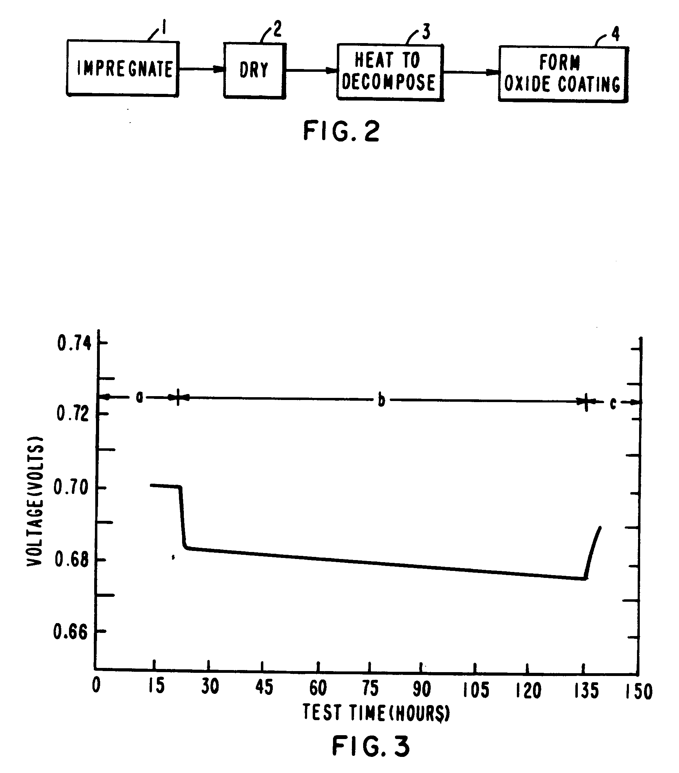

As an example of one method of coating, the coarse metal particle embedded electrode is impregnated, step 1 of Figure 2, with a metal salt solution, containing nickel and/or cobalt salts plus matrix material salts, that, when dried, step 2 in Figure 2, and then heated over about 500°C, step 3 in Figure 2, decomposes or reacts to form the desired mixed oxide coating, step 4 in Figure 2. Useful salts are selected from the group consisting of nitrate, acetate, propionate, butyrate, and mixtures thereof. Preferably, nitrate is not used alone, since it causes difficulty some times in forming uniform films. The preferred salts are acetate alone or acetate plus nitrate. For example, an aqueous mixed solution of nickel nitrate, cerium acetate, and a minor amount of samarium acetate can be used.

The impregnated salt solution will also contain an amount of non-ionic surfactant, that is, surface active agent, effective to allow wetting of the fuel electrode surface to which it is to be applied. Use of surfactant allows better penetration and more uniform coating of the anode cermet surface. The preferred range of surfactant addition is from approximately 0.5 wt.% to 6 wt.% of salt solution weight. These materials are well known in the art and can include alkylaryl ether alcohols, alkylaryl polyether alcohols, alkylaryl polyethylene glycol ethers, and the like. The surfactant is generally eliminated by vaporization or decomposition during heating to form the multiphase layer. These materials help the impregnating solution wet the pore surfaces of the fuel electrode materials.

A minor, optional amount of a colloidal solution of hydrated alumina or zirconia can also be added to the metal oxide precursor salt solution to help reduce cracking or spalling of the film coating. Before impregnation, the metal oxide precursor salt solution is de-aerated to remove trapped air, by a process such as boiling for a short period. The solution can be an aqueous solution or an organic based solution, for example a methanol solution of the salts.

Preferably, the metal salt solution mixture, is applied by vacuum impregnation techniques, where the cell is pretreated by being placed in a container and drawing a vacuum. Then, the de-aerated metal oxide precursor salt solution is added to the container until the fuel electrode of the cell is covered. This procedure ensures complete penetration of solution through the bulk of the fuel electrode. Alternative but less preferred application techniques are pressurized spraying and dipping. After impregnation, the metal containing material is allowed to dry, preferably at approximately 25°C. It may then be reimpregnated or coated if desired and again dried, to form, preferably, a continuous layer on and within the fuel electrode.

When the solution dries, the salt is heated up in an atmosphere of hydrogen and water, containing a little more hydrogen than just needed to decompose the salt to elemental nickel and/or cobalt and form an oxide of the other metal components contained in the solution. In the case of nickel nitrate, cerium acetate, and a minor amount of samarium acetate, this decomposition heating will form fine, elemental Ni precipitate particles, and samarium doped cerium oxide. This elemental metal plus matrix oxide will coat the surfaces of the cermet particles in the porous electrode.

The impregnated cell should be heated slowly, for example at 50°C to 100°C/hour, up to about 600°C, to reduce the tendency of the films of the impregnated materials to crack or spall. The cells containing the impregnated cermet electrodes can then be assembled into a cell bundle, placed into a generator, and heated to the 1,000°C operating temperature of the generator and operated.

The invention will now be illustrated with reference to the following example.

### EXAMPLE

A tubular cell, closed at one end was prepared. It was approximately 400 mm long and 13 mm in diameter, consisting of a 2 mm thick porous support tube of calcia stabilized zirconia, 1 mm thick 40% porous air electrode of doped lanthanum manganite on top of the support tube, and a 50 micrometer thick electrolyte of yttria stabilized zirconia (ZrO₂)_{0.90}(Y₂O₃)_{0.10} on the air electrode. A 100 micrometer thick layer of nickel powder, about 20 micrometers to 35 micrometers in diameter, was deposited over the electrolyte by means of slurry dipping. A ceramic skeleton of yttria stabilized zirconia was deposited around the nickel powder layer to physically attach it to the electrolyte, providing a cermet consisting of nickel and reinforcing zirconia ceramic.

A mixed salt impregnating solution was prepared and consisted of 0.0077 mole cerium acetate; 0.0023 mole samarium nitrate; 0.01 mole nickel nitrate; 0.3 cubic centimeter of non-ionic surfactant; 20 cubic centimeters of water; and 3 cubic centimeters of a 2% colloidal solution of hydrated alumina. The solution was applied to the nickel-zirconia cermet fuel electrode surface by brushing. The impregnated electrode was then dried at room temperature.

The impregnated, mixed salts were thermally decomposed to a mixed oxide during a heat-up procedure for testing the cell. Heating was at a slow rate up to a temperature of 1,000°C. The resulting electronically conductive, porous, multiphase layer over and within the cermet fuel electrode had a very high number of active sites allowing excellent catalytic activity, and was a mixture of nickel particles and samarium doped cerium oxide plus alumina, that is, Ni + Ce_{.75}Sm_{.25}O_{1.875} + Al₂O₃. Microscopic examination of electrodes after operation and testing showed that the impregnation was embedded in the voids of the porous nickel-zirconia cermet electrode, and the diameters of discrete nickel particle precipitates were from 0.4 micrometer to 1.70 micrometers.

Figure 3 of the drawings shows voltage vs. test time behavior of a cell at 900°C, after impregnation, when the cell operated as a fuel cell. The cell had been operated for about 140 hours at 900°C and 160 mA/cm², with about 115 hours being in a fuel gas containing 25 ppm (parts per million) H₂S, in 66.7% H₂, 22.2% CO and 11.1% H₂O. Figure 3 shows operating voltage vs. time during this period. A voltage loss of less than 3.5% was observed during exposure to H₂S which is much lower than observed at this H₂S concentration for untreated anodes. The operating voltage of about 700mV at 900°C and 160 mA/cm₂, observed after the first 22 hours of the run before adding the H₂S, was also much higher than observed for similar cells with untreated anodes. Section (a) of the curve of Figure 3 shows the period of operation with no H₂S; section (b) shows the period with 25 ppm H₂S; and section (c) shows the period, again, with no H₂S.

## Claims

1. An exterior porous electrode bonded to a solid oxygen ion conducting electrolyte, where the electrolyte is also in contact with an interior electrode, said exterior electrode comprising a layer of coarse metal particles selected from the group consisting of nickel particles, cobalt particles, and mixtures thereof, having diameters from 3 micrometers to 35 micrometers, characterized in that the layer of particles of the exterior electrode is coated with a separate electronically conductive, porous, multiphase layer consisting essentially of:
(a) fine metal particles selected from the group consisting of discrete, nickel particles, discrete cobalt particles, and mixtures thereof, having diameters from 0.05 micrometer to 1.75 micrometer, and
(b) conductive oxide selected from the group consisting of cerium oxide, doped cerium oxide, strontium titanate, doped strontium titanate, and mixtures thereof.

2. The electrode of claim 1, characterized in that the fine metal particles have diameters from 0.25 micrometer to 0.75 micrometer and the coarse metal particles have diameters from 5 micrometers to 35 micrometers.

3. The electrode of claim 1, characterized in that the multiphase layer is a complete covering and has a thickness of from 0.5 micrometer to 2.0 micrometers.

4. The electrode of claim 1, characterized in that the dopants used with the conductive oxide in the multiphase layer are selected from the group consisting of Mg, Ca, Sr, Ba, La, Ce, Pr, Nd, Pm, Sm, Eu, Gd, Tb, Dy, Ho, Er, Tm, Yb, Y, Al, and mixtures thereof.

5. The electrode of claim 1, characterized in that the conductive oxide is selected from the group consisting of cerium oxide and cerium oxide doped with a material selected from the group consisting of Mg, Ca, Sr, Ba, La, Ce, Pr, Nd, Pm, Sm, Eu, Gd, Tb, Dy, Ho, Er, Tm, Yb, Y, Al, and mixtures thereof.

6. The electrode of claim 1, characterized in that the fine metal particles are nickel particles, which particles within the multiphase layer increase the number of electrochemically active sites on the electrode, the conductive oxide is selected from the group consisting of cerium oxide and cerium oxide doped with a material selected from the group consisting of Ca, Sm, and mixtures thereof, and the coarse metal particles are partly embedded in a skeletal structure comprising zirconia.

7. A method of coating a separate electronically conductive layer on an exterior, porous electrode layer bonded to a solid oxygen ion conducting electrolyte, where the electrolyte is also in contact with an interior electrode characterized by the steps:
(1) applying, to the exterior porous layer electrode, an admixture consisting essentially of:
(a) a first metal containing salt where the metal containing component is selected from the group consisting of nickel, cobalt, and mixtures thereof, and the salt component is selected from the group consisting of nitrate, acetate propionate, butyrate, and mixtures thereof, and
(b) a second metal containing salt where the metal containing component is selected from the group consisting of cerium, doped cerium, strontium-titanium, doped strontium-titanium, and mixtures thereof, and the salt component is selected from the group consisting of nitrate, acetate propionate, butyrate, and mixtures thereof and
(c) non-ionic surfactant, and
(2) heating the coating admixture in an atmosphere reducing to nickel, cobalt, and their mixtures, at a temperature effective to form a separate, solid, electronically conductive, porous, multiphase layer consisting essentially of conductive oxide selected from the group consisting of cerium oxide, doped cerium oxide, strontium, titanate, doped strontium titanate, and mixtures thereof, containing therethrough fine metal particle precipitate selected from the group consisting of discrete nickel particles, discrete cobalt particles, and mixtures thereof, having diameters from 0.05 micrometer to 1.75 micrometers.

8. The method of claim 7, characterized in that the exterior porous electrode that is coated comprises coarse metal particles having diameters from 3 micrometers to 35 micrometers partly embedded in a skeletal structure comprising zirconia, and the fine metal particle precipitates formed in step (2) have diameters from 0.25 micrometers to 0.75 micrometers.

9. The method of claim 7, characterized in that dopants used with the metal of the second metal containing salt are selected from the group consisting of Mg, Ca, Sr, Ba, La, Ce, Pr, Nd, Pm, Sm, Eu, Gd, Tb, Dy, Ho, Er, Tm, Yb, Y, Al, and mixtures thereof, and where the heating in step (2) is at a rate of from 50°C/hour to 100°C/hour.

## Patentansprüche

1. Äussere poröse Elektrode, die an einen ionenleitenden Festoxidelektrolyten gebunden ist, wobei der Elektrolyt auch mit einer inneren Elektrode in berührung ist, wobei die äussere Elektrode eine Schicht aus groben Metallteilchen umfasst, die von der Gruppe ausgewählt werden, die aus Nickelteilchen, Kobaltteilchen und Mischungen davon besteht, mit Durchmessern von 3 Mikrometer bis 35 Mikrometer, dadurch gekennzeichnet, dass die Teilchenschicht der äusseren Elektrode mit einer getrennten, elektronisch leitenden porösen Multiphasenschicht beschichtet ist, die im wesentlichen aus folgendem besteht:
(a) feinen Metallteilchen, die von der Gruppe ausgewählt werden, die aus diskreten Nickelteilchen, diskreten Kobaltteilchen, und Mischungen davon besteht, mit Durchmessern von 0,05 Mikrometer bis 1,75 Mikrometer, und
(b) leitendem Oxid, das von der Gruppe ausgewählt wird, die aus Ceriumoxid, dotiertem Ceriumoxid, Strontiumtitanat, dotiertem Strontiumtitanat und Mischungen davon besteht.

2. Elektrode nach Anspruch 1, dadurch gekennzeichnet, dass die feinen Metallteilchen Durchmesser von 0,25 Mikrometer bis 0,75 Mikrometer haben, und die groben Metallteilchen Durchmesser von 5 Mikrometer bis 35 Mikrometer haben.

3. Elektrode nach Anspruch 1, dadurch gekennzeichnet, dass die Multiphasenschicht eine vollständige Bedeckung ist und eine Dicke von 0,5 Mikrometer bis 2,0 Mikrometer hat.

4. Elektrode nach Anspruch 1, dadurch gekennzeichnet, dass die Dotanten, die mit dem leitenden Oxid in der Multiphasenschicht benutzt werden, von der Gruppe ausgewählt werden, die aus Mg, Ca, Sr, Ba, La, Ce, Pr, Nd, Pm, Sm, Eu, Gd, Tb, Dy, Ho, Er, Tm, Yb, Y, Al und Mischungen davon besteht.

5. Elektrode nach Anspruch 1, dadurch gekennzeichnet, dass das leitende Oxid von der Gruppe ausgewählt wird, die aus Ceriumoxid besteht, und Ceriumoxid, das mit einem Material dotiert ist, das von der Gruppe ausgewählt wird, die aus Mg, Ca, Sr, Ba, La, Ce, Pr, Nd, Pm, Sm, Eu, Gd, Tb, Dy, Ho, Er, Tm, Yb, Y, Al und Mischungen davon besteht, ausgewählt wird.

6. Elektrode nach Anspruch 1, dadurch gekennzeichnet, dass die feinen Metallteilchen Nickelteilchen sind, wobei die Teilchen in der Multiphasenschicht die Anzahl elektrochemisch aktiver Stellen auf der Elektrode erhöhen, wobei das leitende Oxid von der Gruppe ausgewählt wird, die aus Ceriumoxid besteht, und Ceriumoxid, das mit einem Material dotiert ist, das aus der Gruppe ausgewählt wird, die aus Ca, Sm und Mischungen davon besteht, und die groben Metallteilchen teilweise in einer skelettartigen Struktur eingebettet sind, die Zirconiumdioxid umfasst.

7. Verfahren zum Beschichten einer getrennten, elektronisch leitenden Schicht auf einer äusseren, porösen Elektrodenschicht, die an einen ionenleitenden Festoxidelektrolyten gebunden ist, wobei der Elektrolyt auch mit einer inneren Elektrode in Berührung ist, gekennzeichnet durch die folgenden Schritte:
(1) auf die äussere poröse Elektrodenschicht wird eine Zumischung aufgetragen, die im wesentlichen aus folgendem besteht:
(a) einem ersten Salz, das Metall enthält, wobei die Komponente, die Metall enthält, von der Gruppe ausgewählt wird, die aus Nickel, Kobalt und Mischungen davon besteht, und die Salzkomponente von der Gruppe ausgewählt wird, die aus Nitrat, Acetat, Propionat, Butyrat und Mischungen davon besteht, und
(b) einem zweiten Salz, das Metall enthält, wobei die Komponente, die Metall enthält, von der Gruppe ausgewählt wird, die aus Cerium, dotiertem Cerium, Strontium-Titan, dotiertem Strontium-Titan und Mischungen davon besteht, und die Salzkomponente von der Gruppe ausgewählt wird, die aus Nitrat, Acetat, Propionat, Butyrat und Mischungen davon besteht, und
(c) einem nichtionischen oberflächenaktiven Stoff, und
(2) die Beschichtungszumischung wird in einer Atmosphähre von Wasserstoff und Wasser erhitzt, die ein wenig mehr Wasserstoff als notwendig enthält, um die Zumischung in elementaren Nickel, Kobalt, und deren Mischungen zu zerlegen, und ein Oxid der anderen Metallkomponenten zu bilden, die in der Zumischung enthalten sind, wobei die Erhitzung bei einer Temperatur stattfindet, die wirksam ist, um eine getrennte, feste, elektronisch leitende, poröse Multiphasenschicht zu bilden, die im wesentlichen aus leitendem Oxid besteht, das von der Gruppe ausgewählt wird, die aus Ceriumoxid, dotiertem Ceriumoxid, Strontium, Titanat, dotiertem Strontiumtitanat und Mischungen davon besteht, die feinen Metallteilchenniederschlag enthält, der von der Gruppe ausgewählt wird, die aus diskreten Nickelteilchen, diskreten Kobaltteilchen und Mischungen davon besteht, mit Durchmessern von 0,05 Mikrometer bis 1,75 Mikrometer.

8. Verfahren nach Anspruch 7, dadurch gekennzeichnet, dass die poröse äussere Brennstoffelektrode, die beschichtet ist, grobe Metallteilchen mit Durchmessern von 3 Mikrometer bis 35 Mikrometer umfasst, die teilweise in eine skelettartige Struktur eingebettet ist, die Zirconiumdioxid umfasst, und die in Schritt (2) gebildeten feinen Metallteilchenniederschläge Durchmesser von 0,25 Mikrometer bis 0,75 Mikrometer haben.

9. Verfahren nach Anspruch 7, dadurch gekennzeichnet, dass die Dotanten, die mit dem Metall des zweiten Metall enthaltenden Salzes benutzt werden, von der Gruppe ausgewählt werden, die aus Mg, Ca, Sr, Ba, La, Ce, Pr, Nd, Pm, Sm, Eu, Gd, Tb, Dy, Ho, Er, Tm, Yb, Y, Al und Mischungen davon besteht, und wo die Erhitzung in Schritt (2) bei einer Geschwindigkeit von 50°C/Stunde bis 100°/Stunde stattfindet.

## Revendications

1. Electrode externe poreuse en contact avec un électrolyte solide conducteur d'ions oxygène, l'électrolyte étant également en contact avec une électrode interne, ladite électrode externe comprenant une couche de particules métalliques grossières choisies dans le groupe constitué de particules de nickel, de particules de cobalt et de mélanges de celles-ci, ayant un diamètre de 3 à 35 »m, caractérisée en ce que la couche de particules de l'électrode externe est revêtue d'une couche multiphase, poreuse, conductrice électronique, séparée, constituée essentiellement
(a) de fines particules métalliques choisies dans le groupe constitué de particules individuelles de nickel, de particules individuelles de cobalt et de mélanges de celles-ci, ayant un diamètre de 0,05 à 1,75 »m, et
(b) d'un oxyde conducteur choisi dans le groupe constitué d'oxyde de cérium, d'oxyde de cérium dopé, de titanate de strontium, de titanate de strontium dopé et de mélanges de ceux-ci.

2. Electrode conforme à la revendication 1, caractérisée en ce que les particules métalliques fines ont un diamètre compris entre 0,25 et 0,75 »m et les particules métalliques grossières ont un diamètre compris entre 5 et 35 »m.

3. Electrode conforme à la revendication 1, caractérisée en ce que la couche multiphase le couvre complètement et qu'elle a une épaisseur comprise entre 0,5 et 2,0 »m.

4. Electrode conforme à la revendication 1, caractérisée en ce que les dopants utilisés avec l'oxyde conducteur dans la couche multiphase sont choisi dans le groupe constitué de Mg, Ca, Sr, Ba, La, Ce, Pr, Nd, Pm, Sm, Eu, Gd, Tb, Dy, Ho, Er, Tm, Yb, Y, Al et de mélanges de ces éléments.

5. Electrode conforme à la revendication 1, caractérisée en ce que l'oxyde conducteur est choisi dans le groupe constitué d'oxyde de cérium et d'oxyde de cérium dopé avec un matériau choisi dans le groupe constitué de Mg, Ca, Sr, Bû, La, Ce, Pr, Nd, Pm, Sm, Eu, Gd, Tb, Dy, Ho, Er, Tm, Yb, Y, Al et de mélanges de ces éléments.

6. Electrode conforme à la revendication 1, caractérisée en ce que les fines particules métalliques sont des particules de nickel, augmentant le nombre de sites électrochimiquement actifs dans la couche multiphase, l'oxyde conducteur est choisi dans le groupe constitué d'oxyde de cérium et d'oxyde de cérium dopé avec un matériau choisi dans le groupe constitué de Ca, Sm, et de mélanges de ceux-ci, et les particules métalliques grossières sont partiellement enfermées dans un squelette de zircone.

7. Méthode de dépôt d'une couche conductrice électronique séparée sur une couche poreuse d'électrode externe, en contact avec un électrolyte conducteur d'ions oxygène, dans laquelle l'électrolyte est également en contact avec une électrode interne, caractérisée par les étapes :
(1) d'application, sur la couche externe d'électrode, d'un mélange constitué essentiellement
(a) d'un premier sel contenant du métal, dans lequel le composant contenant le métal est choisi dans le groupe constitué de nickel, de cobalt et de mélanges de ceux-ci, et le composant salin est choisi dans le groupe constitué de nitrate, d'acétate, de propionate, de butyrate et de mélanges de ces sels, et
(b) d'un deuxième sel contenant du métal, dans lequel le composant contenant le métal est choisi dans le groupe constitué de cérium, de cérium dopé, de strontium-titane, de strontium-titane dopé et de mélanges de ceux-ci, et le composant salin est choisi dans le groupe constitué de nitrate, d'acétate, de propionate, de butyrate et de mélanges de ceux-ci, et
(c) d'un tensio-actif non-ionique, et
(2) de chauffage du mélange de revêtement dans une atmosphère d'hydrogène et d'eau, contenant un peu plus d'hydrogène que la quantité nécessaire pour décomposer le mélange en nickel et cobalt élémentaires et leur mélanges, et pour former les oxydes des autres composants métalliques contenus dans le mélange, le chauffage se faisant à une température efficace pour former une couche multiphase poreuse, conductrice électronique, solide, séparée, constituée essentiellement d'un oxyde conducteur choisi dans le groupe constitué d'oxyde de cérium, d'oxyde de cérium dopé, de titanate de strontium, de titanate de strontium dopé et de mélanges de ceux-ci, cette couche contenant un précipité de fines particules métalliques choisies dans le groupe constitué de particules individuelles de nickel, de particules individuelles de cobalt et de mélanges de celles-ci, ayant un diamètre compris entre 0,05 et 1,75 »m.

8. Méthode conforme à la revendication 7, caractérisée en ce que l'électrode poreuse externe enduite comprend des particules métalliques grossières de diamètre compris entre 3 et 35 »m, partiellement inclues dans un squelette de zircone, et en ce que les précipités de particules métalliques fines de l'étape (2) ont un diamètre compris entre 0,25 et 0,75 »m

9. Méthode conforme à la revendication 7, caractérisée en ce que les dopants utilisés avec le métal du deuxième sel métallique sont choisis dans le groupe constitué de Mg, Ca, Sr, Ba, La, Ce, Pr, Nd, Pm, Sm, Eu, Gd, Tb, Dy, Ho, Er, Tm, Yb, Y, Al et de mélanges de ces éléments, et dans laquelle le chauffage de l'étape (2) se fait avec une vitesse comprise entre 50 °C/heure et 100°C/heure.
